(19) Europäisches Patentamt / European Patent Office / Office européen des brevets

(11) **EP 3 657 390 A1**

(12) **EUROPEAN PATENT APPLICATION**

(43) Date of publication:
27.05.2020 Bulletin 2020/22

(51) Int Cl.:
*G06K 9/32* (2006.01)　　　*G06K 9/62* (2006.01)

(21) Application number: **19189207.4**

(22) Date of filing: **30.07.2019**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN**<br><br>(30) Priority: **22.11.2018　CN 201811399155**<br><br>(71) Applicant: **Delta Electronics, Inc.**<br>**Taoyuan City 33341 (TW)** | (72) Inventors:<br>• CHEN, Yu-Ta<br>　33341 Taoyuan City (TW)<br>• LIANG, Feng-Ming<br>　33341 Taoyuan City (TW)<br>• JHENG, Jing-Hong<br>　33341 Taoyuan City (TW)<br><br>(74) Representative: **2K Patentanwälte Blasberg Kewitz & Reichel Partnerschaft mbB**<br>**Schumannstrasse 27**<br>**60325 Frankfurt am Main (DE)** |

(54) **OBJECT RECOGNITION SYSTEM AND METHOD USING SIMULATED OBJECT IMAGES**

(57)　　An object-recognition method using simulated object images is provided. The method includes the steps of: (A) obtaining an object-image set including a plurality of object images and a background-image set including a plurality of background images; (B) generating a simulated-object-image set including a plurality of simulated object images according to the object-image set and the background-image set; (C) training an object-recognition model according to the simulated-object-image set; and (D) inputting a to-be-tested image obtained from a to-be-tested scene to the object-recognition model to obtain an object-recognition result.

obtaining an object-image set including a plurality of object images and a background-image set including a plurality of background images　— S510

generating a simulated-object-image set including a plurality of simulated object images according to the object-image set and the background-image set　— S520

training an object-recognition model according to the simulated-object-image set　— S530

inputting a to-be-tested image obtained from a to-be-tested scene to the object-recognition model to obtain an object-recognition result　— S540

FIG. 5

EP 3 657 390 A1

**Description**

**CROSS REFERENCE TO RELATED APPLICATIONS**

This Application claims priority of China Patent Application No. 201811399155.1, filed on Nov. 22, 2018, the entirety of which is incorporated by reference herein.

**BACKGROUND OF THE INVENTION**

**Field of the Invention**

The invention relates to object recognition, and, in particular, to an object recognition system and method thereof using simulated object images.

**Description of the Related Art**

The training of a recognition model is based on a large amount of annotation data. The amount of data and the quality of the data affect the recognition rate of the trained recognition model. For some tasks or fields, the data can be collected over a long period of time to help solve problems in the field. Accordingly, it takes time to collect data and classify and label it before training the recognition model.

In a recognition system, the recognition rate depends on whether there are enough data samples, and the higher the diversity of the samples, the easier it is to overcome the problems encountered in each field. Thus, a good recognition model will take a lot of time to collect and annotate data. In addition, when the recognition rate in the specific field cannot meet the standard, the data of the field can be collected, and target training and adjustment can be applied to improve the recognition rate of the field. However, it also leads to an increase in overall building time of the recognition model and an increase in initial building costs. On the other hand, in areas where private information is more closely protected, there is a dilemma wherein it is difficult to obtain large amounts of data, and more resources must be spent on collecting data.

**BRIEF SUMMARY OF THE INVENTION**

A detailed description is given in the following embodiments with reference to the accompanying drawings.

In an exemplary embodiment, an object-recognition method using simulated object images is provided. The method includes the steps of: (A) obtaining an object-image set including a plurality of object images and a background-image set including a plurality of background images; (B) generating a simulated-object-image set including a plurality of simulated object images according to the object-image set and the background-image set; (C) training an object-recognition model according to the simulated-object-image set; and (D) inputting a to-be-tested image obtained from a to-be-tested scene to the object-recognition model to obtain an object-recognition result.

In another exemplary embodiment, an object-recognition system using simulated object images is provided. The system includes: a non-volatile memory and a processor. The non-volatile memory is configured to store an object-recognition program. The processor is configured to execute the object-recognition program to perform the steps of: (A) obtaining an object-image set including a plurality of object images and a background-image set including a plurality of background images; (B) generating a simulated-object-image set including a plurality of simulated object images according to the object-image set and the background-image set; (C) training an object-recognition model according to the simulated-object-image set; and (D) inputting a to-be-tested image obtained from a to-be-tested scene to the object-recognition model to obtain an object-recognition result.

**BRIEF DESCRIPTION OF THE DRAWINGS**

The invention can be more fully understood by reading the subsequent detailed description and examples with references made to the accompanying drawings, wherein:

FIG. 1 is a block diagram of an object-recognition system in accordance with an embodiment of the invention;
FIGs. 2A~2M are diagrams of different images used in the object-recognition procedure in accordance with an embodiment of the invention;
FIG. 3A is a diagram of a training object in the blurriness mask in accordance with an embodiment of the invention;
FIG. 3B is a diagram of coefficients in the blurriness mask in accordance with an embodiment of the invention;
FIG. 3C is a diagram of coefficients in the brightness mask in accordance with an embodiment of the invention;

FIGs. 4A~4F are diagrams of the training objects used in the object-recognition procedure in accordance with another embodiment of the invention; and

FIG. 5 is a flow chart of an object-recognition method using simulated object images in accordance with an embodiment of the invention.

## DETAILED DESCRIPTION OF THE INVENTION

The following description is made for the purpose of illustrating the general principles of the invention and should not be taken in a limiting sense. The scope of the invention is best determined by reference to the appended claims.

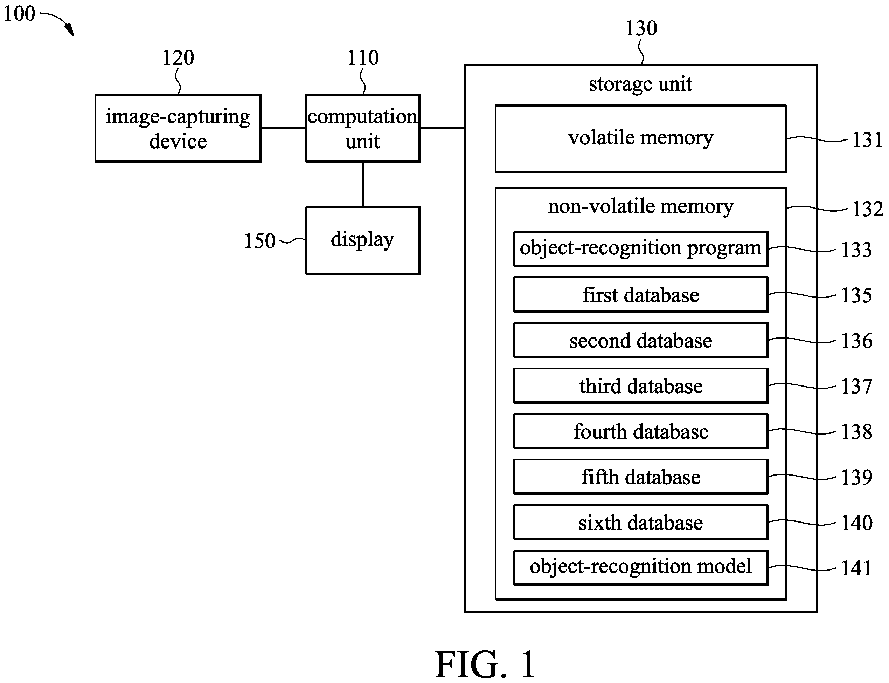

FIG. 1 is a block diagram of an object- recognition system in accordance with an embodiment of the invention.

In an embodiment, the object- recognition system 100 can be implemented on an electronic device such as a personal computer, a server, or a portable electronic device. The object-recognition system 100 includes a computation unit 110, an image-capturing device 120, a storage unit 130, and a display unit 150.

The computation unit 110 can be implemented in various manners, such as dedicated hardware circuits or general-purpose hardware (for example, a single processor, a multi-processor capable of performing parallel processing, a graphics processor, or another processor with computation capability), and may provide the functions described below when executing the code or software related to each model and process of the present invention. The image-capturing device 120, for example, may be a camera, configured to capture a to-be-tested image for a scene to be tested.

The storage unit 130 includes a volatile memory 131 and a non-volatile memory 132. The non-volatile memory 132 is configured to store databases of various image sets, various program codes and data required in the object-recognition procedure, such as various algorithms and/or object-recognition model, and the like. The non-volatile memory 132, for example, may be a hard disk drive, a solid-state disk, a flash memory, or a read-only memory, but the invention is not limited thereto. The volatile memory 131 may be a random access memory, such as a static random access memory (SRAM) or a dynamic random access memory (DRAM), but the invention is not limited thereto. The volatile memory 131, for example, is capable of temporarily storing intermediate data and images in the object-recognition procedure.

In an embodiment, the non-volatile memory 132 may store an object-recognition program 133, and the computation unit 110 may load the object-recognition program 133 from the non-volatile memory 132 to the volatile memory 131 for execution, wherein the object-recognition program 133 includes a program code of an object-recognition method.

The display unit 150 may be a display panel (e.g., a thin-film liquid-crystal display panel, an organic light-emitting display panel, or other panels having display capabilities) configured to display input characters, numbers, symbols, dragging movements of the mouse, or a user interface provided by an application to be viewed by the user. The object-recognition system 100 may further include an input device (not shown) for the user to perform a corresponding operation, such as a mouse, a stylus, or a keyboard, but the present invention is not limited thereto.

In an embodiment, the non-volatile memory 132 may further include a first database 135, a second database 136, a third database 137, a fourth database 138, a fifth database 139, a sixth database 140, and an object-recognition model 141. For example, the first database 135 may store a plurality of object-scene images, and each of the object-scene images may include objects of one or more types. For example, the object may be a character (e.g., A to Z, 0 to 9, or other fonts), a human body, a license plate, a component, a logo, and the like, but the present invention is not limited thereto.

The second database 136 may store a plurality of background images, such as a background image set. The background images may be real background images of any real scene obtained under different shooting conditions, and not limited to the background images of the scene to be tested, and may not include the to-be-tested object. In some embodiments, the background image may further include a virtual background image simulated by computer-vision technology.

The third database 137 may store a plurality of object images, such as an object image set. Each of the object images may be captured from the object-scene images stored in the first database 135. The fourth database 138 may store a plurality of simulated object images, such as a simulated-object image set.

The computation unit 110 may generate the simulated-object image set in the fourth database 138 according to the object image set in the third database 137 and the background image set in the second database 136, and the details will be described later.

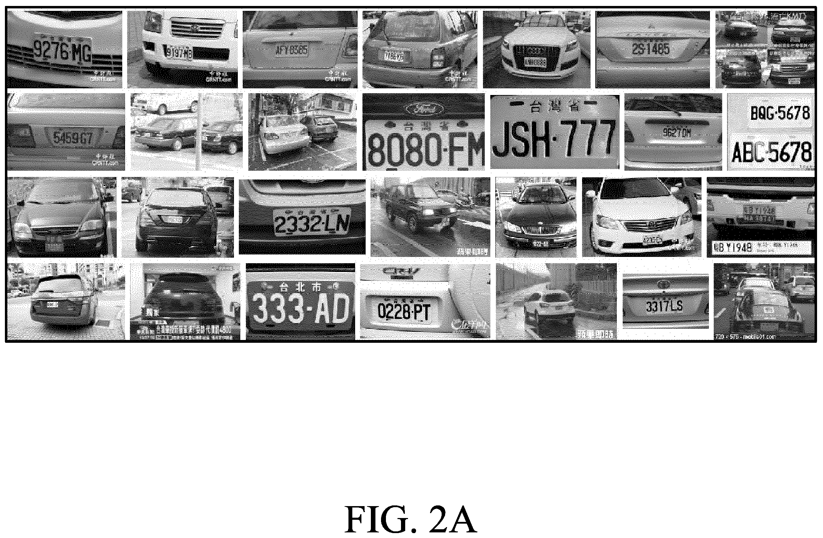

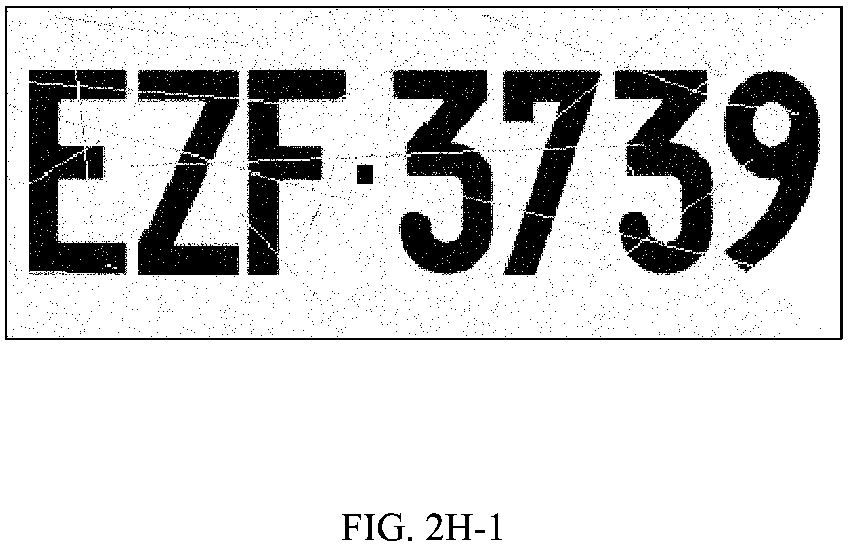

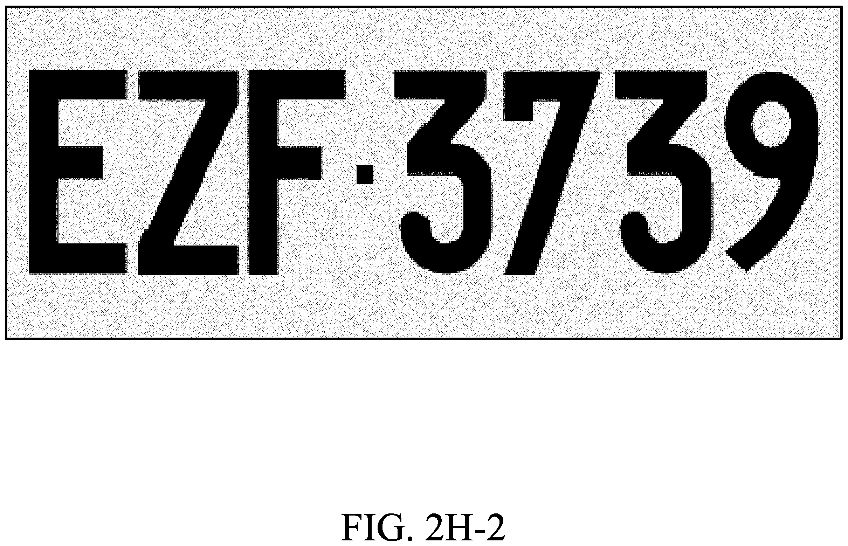

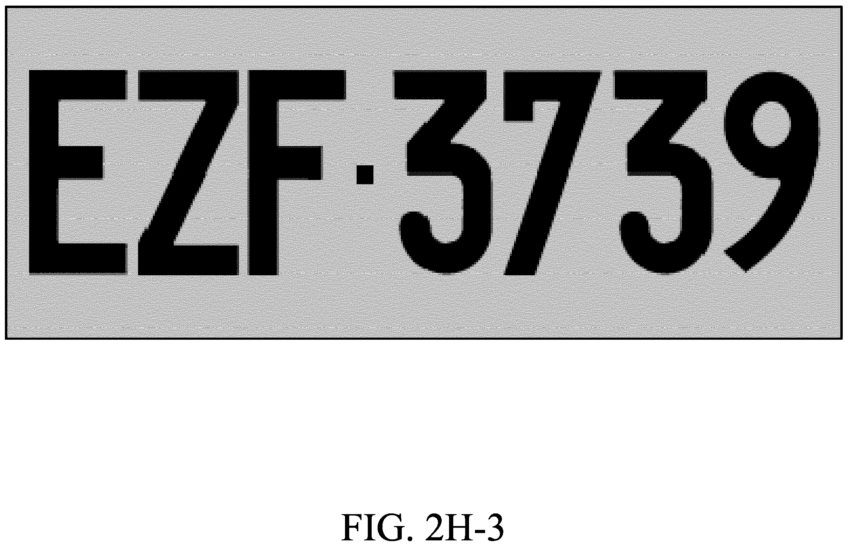

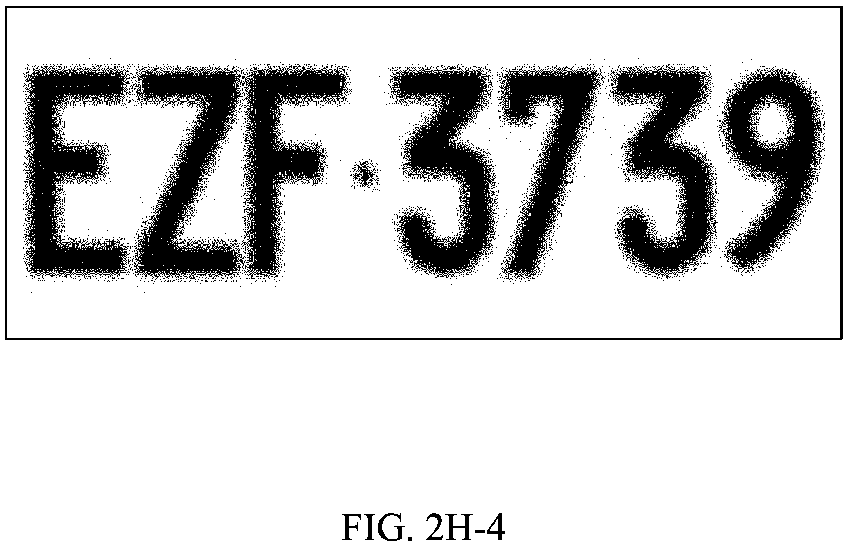

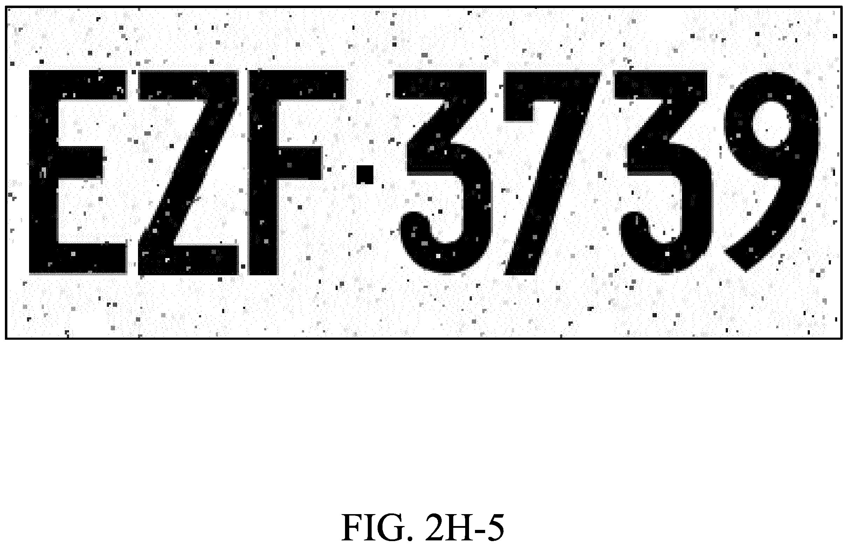

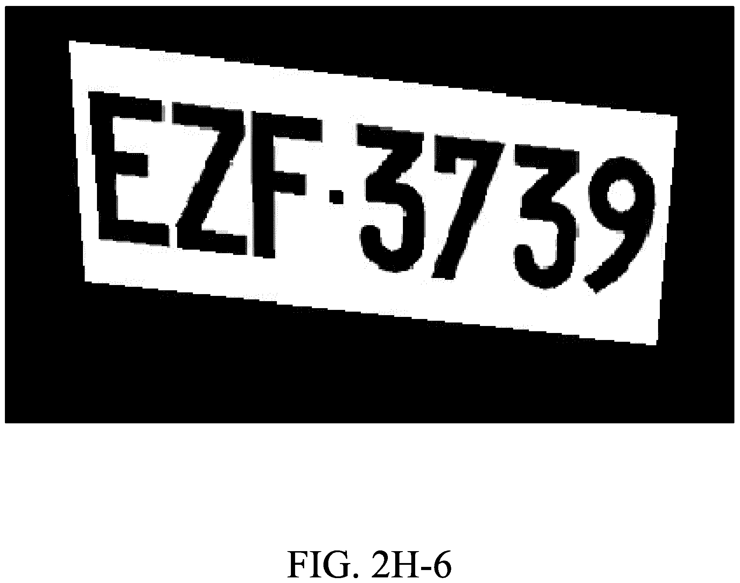

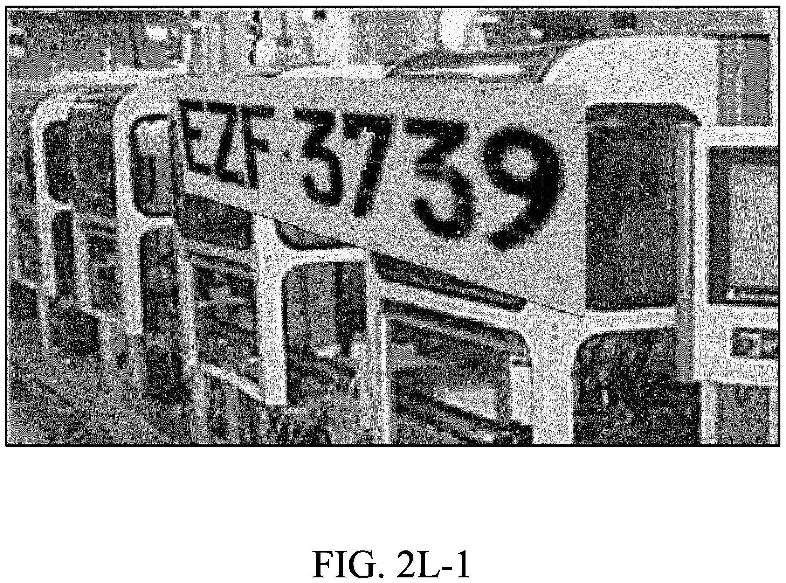

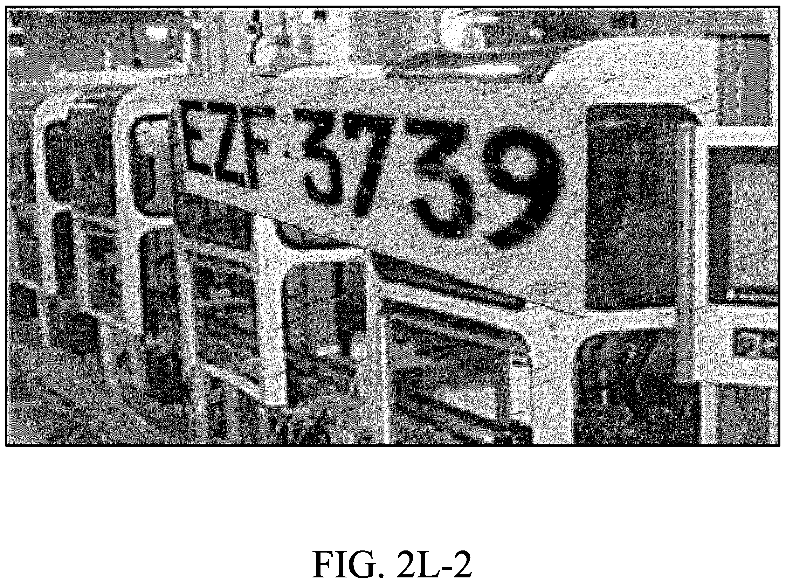

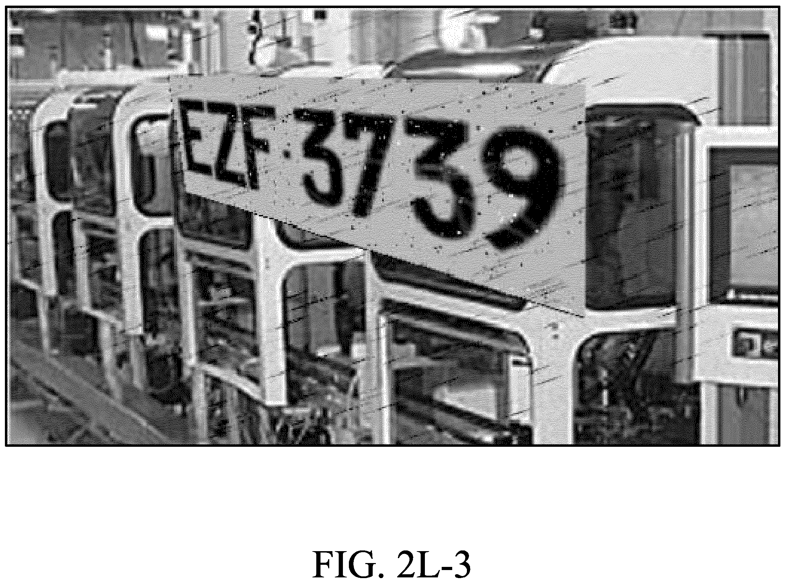

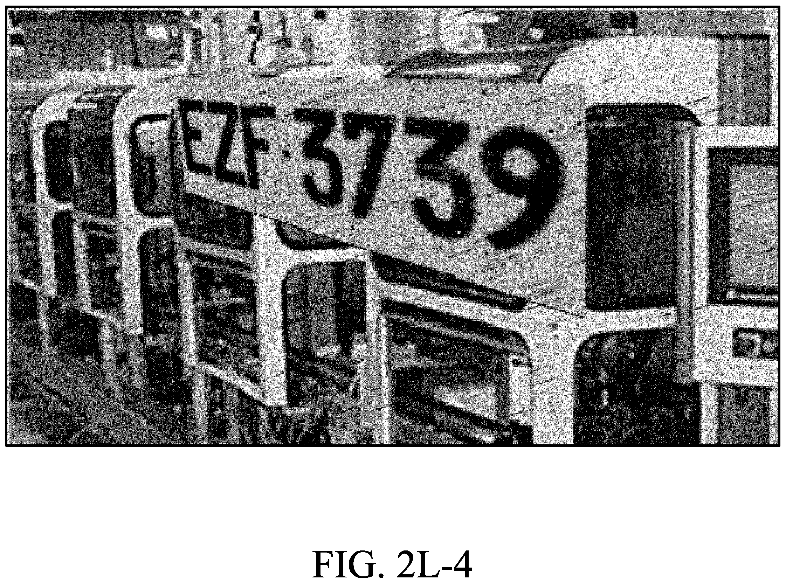

FIGs. 2A~2M are diagrams of different images used in the object-recognition procedure in accordance with an embodiment of the invention. Referring to FIG. 1 and FIGs. 2A~2M, for purposes of description, the to-be-tested object in the following embodiments is a license plate.

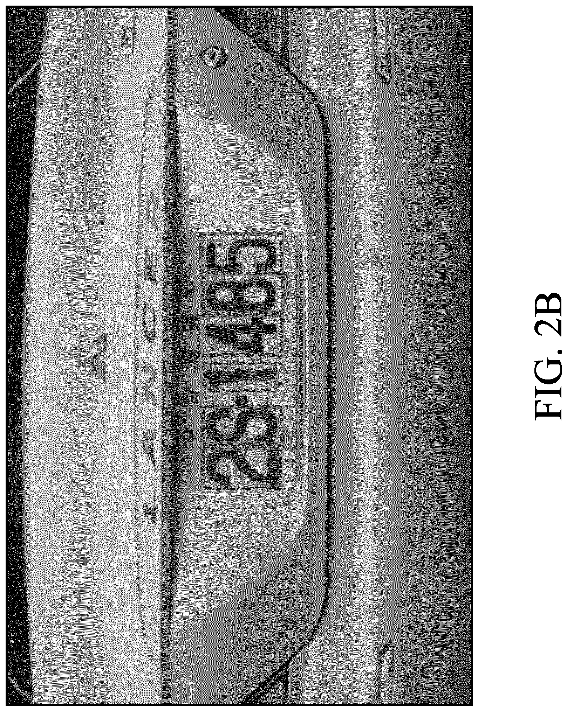

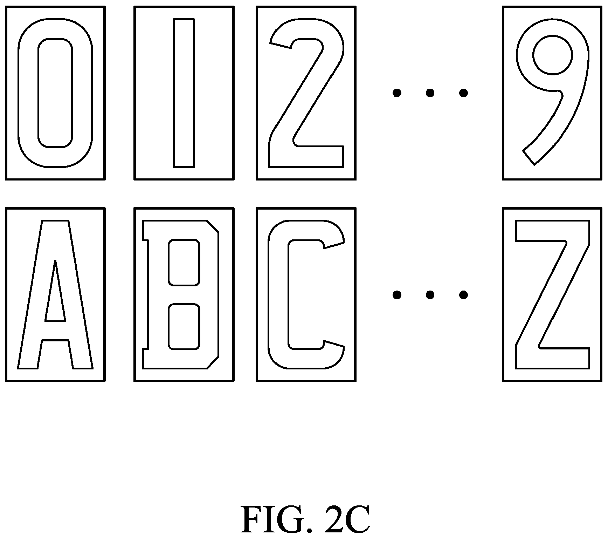

Each of the object-scene images stored in the first database 135 may be a real license-plate image, which includes all of the license-plate characters (e.g., A to Z, 0 to 9, or other fonts), as shown in FIG. 2A. For example, the computation unit 110 may perform an image-capturing process on each of the object-scene images to obtain an image of each character (i.e., an object image) of the license plate, as shown in FIG. 2B. The computation unit 110 may use optical-character-recognition (OCR) technology or other object-recognition technology to obtain all license-plate characters, and each license-plate character is a separate object image, as shown in FIG. 2C. For example, object images of ten numbers and 26 English letters are captured, and the object images of all license-plate characters, for example, can be stored in the third database 137.

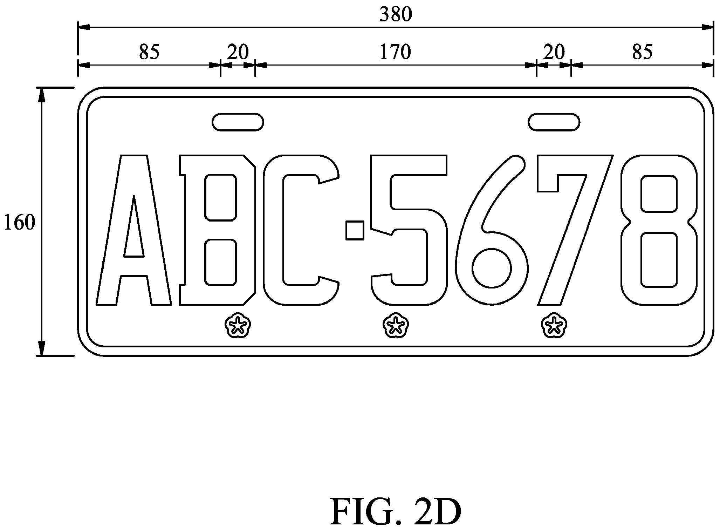

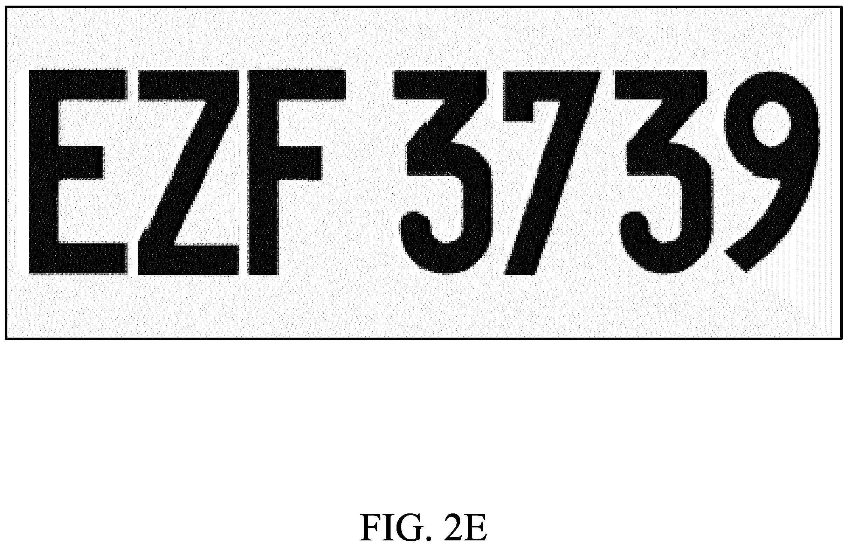

Afterwards, the computation unit 110 may use one or more object images to form one or more training objects according to a predetermined rule. Since the license plate is taken as an example in the embodiment, the predetermined rule is a rule for the license plate, including, for example, the license-plate length and width, the font spacing, the character limit, the character layout, the font color, the license-plate color, the size and position of the screw hole, and the like. FIG. 2D shows the rules for making license plates for automobiles (general light passenger vehicle), but the invention is not limited to automobile license plates, and license plates for other vehicle types can also be used, such as large heavy-duty motorcycles, original heavy-duty motorcycles, buses, large trucks, and so forth. That is, the license plates of different vehicle types have corresponding license-plate making rules, and the computation unit 110 may use the different combinations of the object images of the license-plate characters according to the selected license plate to generate one or more training objects (e.g., a simulated license-plate image), as shown in FIG. 2E. It should be noted that the simulated license-plate image is formed using object images of different license-plate characters in the third database 137, and the simulated license-plate image does not incorporate various image features such as noises, blurriness, shape change, or a real scene.

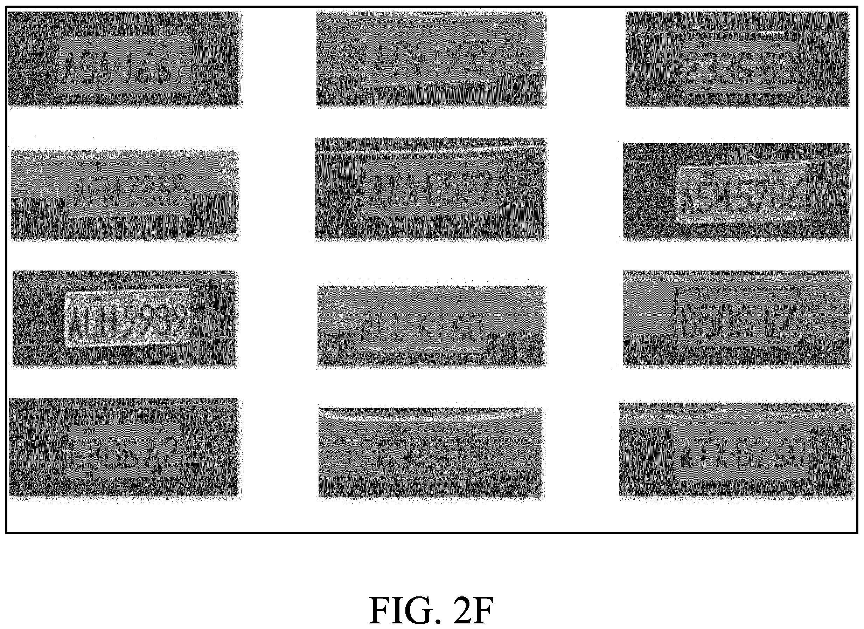

The computation unit 110 may then perform a first image processing to add one or more object-image features and one or more background-image features to the simulated license-plate image (i.e., the training object). For example, the object-image feature may be, for example, a to-be-tested object in a real scene, which is visually affected by the influence of the environment. The object-image features may include, for example, blurriness, scratches or stains, shadows, shadings, overexposures, distortions, and chromatic aberrations, but the invention is not limited thereto. FIG. 2F is a diagram of various license plates including different object-image features. Since the object-image features and the background-image features include a plurality of image features of different types, the computation unit 110 may perform the first image processing to add one or more object-image features to each training object (e.g., a simulated license-plate image) to generate one or more simulated objects to be tested (e.g., processed simulated license-plate images). For example, FIGs. 2H-1~2H-6 are diagrams of various simulated objects to be tested by respectively adding scratches, color aberrations, shadows, blurriness, noises, and shape deformation to the simulated license-plate image in FIG. 2E. It should be noted that the present invention is not limited to adding only one of the object-image features to each training object (e.g., a simulated license-plate image).

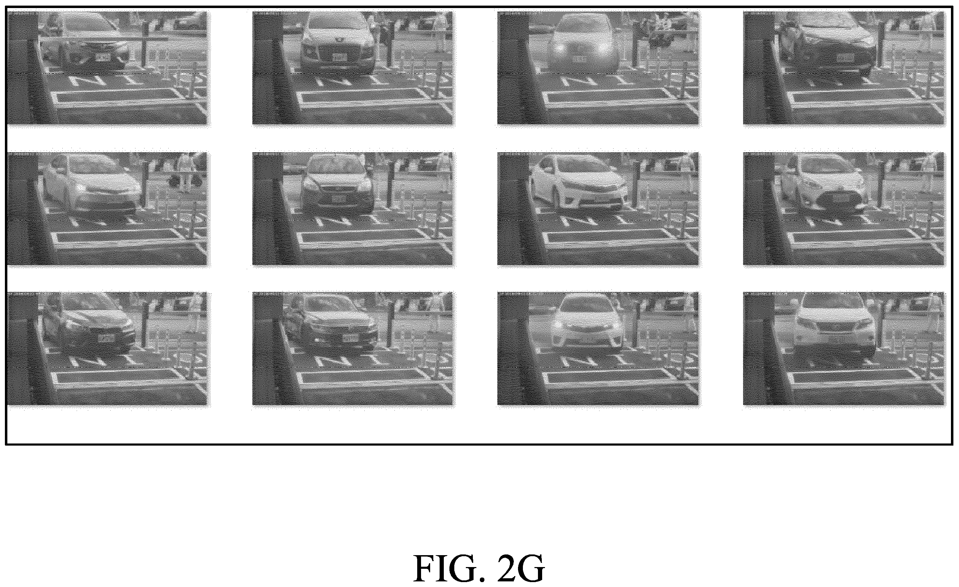

The background-image feature may be, for example, noises generated by images captured in a real scene, and background-image features may also be referred to as environmental-noise features. The background-image features may include, for example, blurriness, scratches or stains, shadows, noises, shadowing, overexposure, distortion, and chromatic aberration, but the invention is not limited thereto. FIG. 2G is a diagram of real scenes including different background-image features. Details of the object-image features and background-image features will be described later.

In some embodiments, the computation unit 110 may perform the first image processing to add one or more object-image features and one or more background-image features to each training object (e.g., simulated license-plate image) to generate one or more simulated objects to be tested. For example, in addition to the object-image features that may appear on the license plate, the license-plate image may also be affected by the environmental noises in the background of the real scene, and thus the computation unit 110 may also add one or more object-image features and one or more background-image features to each training object to generate one or more simulated objects to be tested.

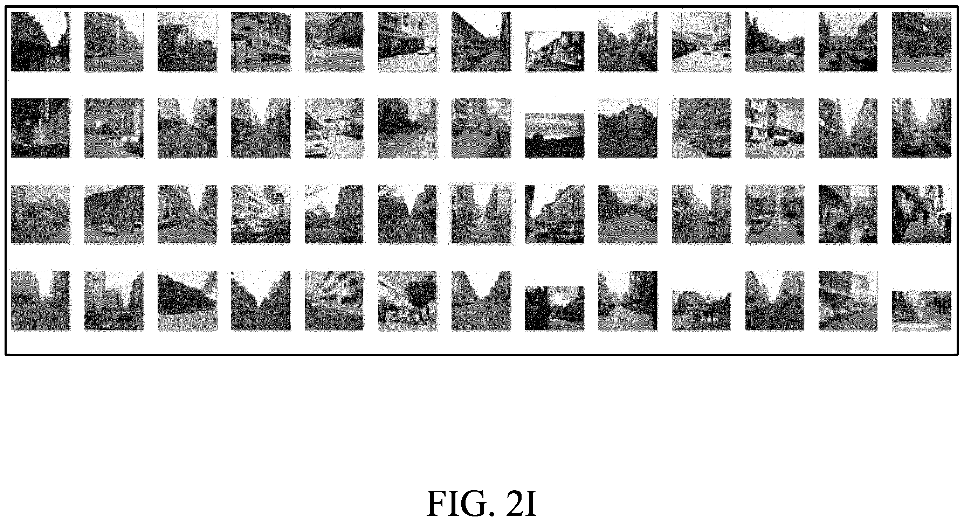

In an embodiment, background images in the background-image set stored in the second database 136 are illustrated in FIG. 2I. It should be noted that the background images in FIG. 2I may not include the license plate.

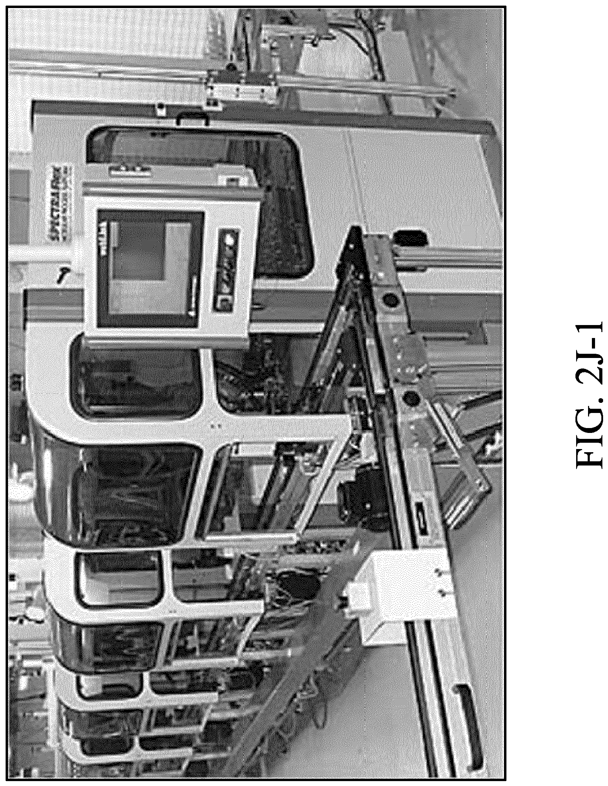

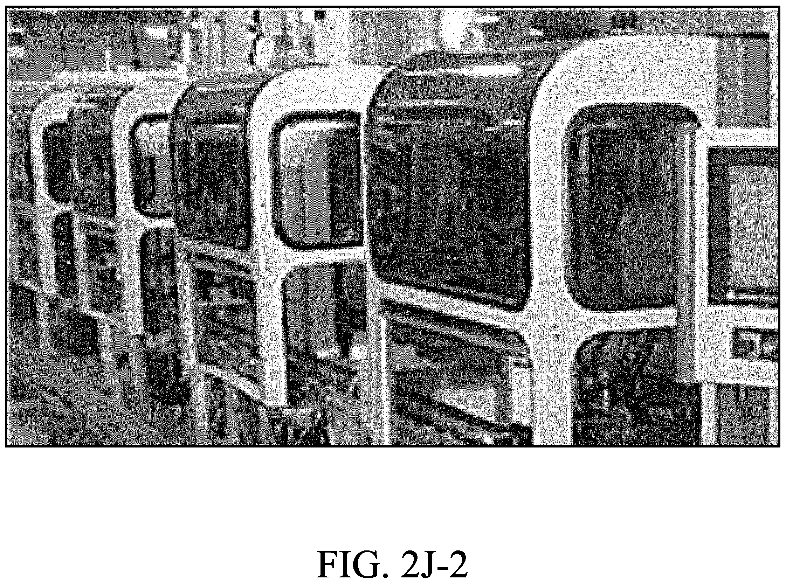

Afterwards, the computation unit 110 may randomly select one of the background images from the background-image set stored in the second database 136, wherein the selected background image may be, for example, all or a part of one of the real background images in the background-image set (e.g., a region of interest), as respectively shown in FIG. 2J-1 and FIG. 2J-2. Assuming that the background image (e.g., a first background image) of the region of interest in FIG. 2J-2 is used, the computation unit 110 may perform a second image processing to add one or more background-image features to the first background image to generate a simulated background image. For example, the computation unit 110 may add one or more background-image features such as blurriness, scratches or stains, shadows, noises, shadowing, overexposure, shape deformation, etc. to the first background image, so that the scene in the processed first background image can be incorporated into different image features that were not originally captured, and thus a smaller number of background images can be used to achieve the image effect of the background environment under different shooting conditions.

In the aforementioned embodiments, the computation unit 110 may perform the first image processing to add one or more object-image features and one or more background-image features to each training object (e.g., simulated license-plate image) to generate one or more simulated objects to be tested, and perform the second image processing to add one or more background-image features to the first background image to generate a simulated background image.

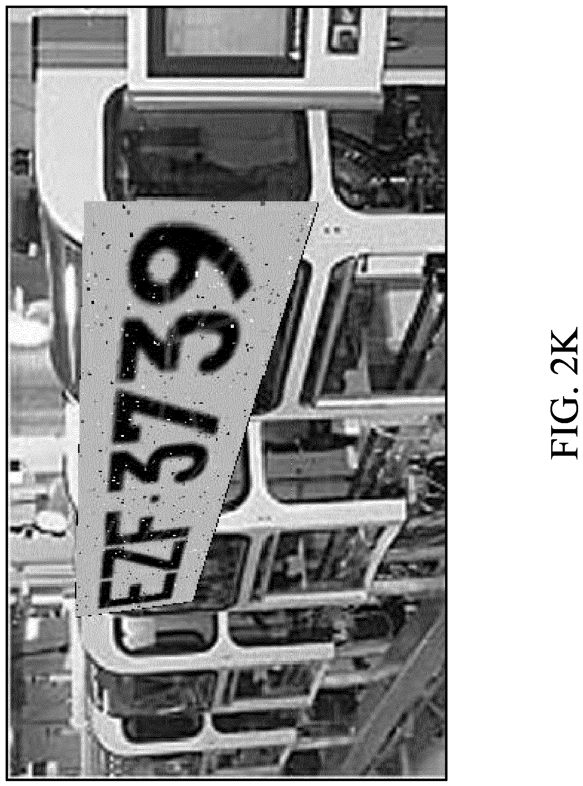

Since the simulated objects to be tested are generated by adding one or more object-image features to the simulated license-plate image and the simulated background image is generated by adding one or more background-image features to the first background image, however, there may be no correlation between the simulated objects to be tested and the simulated background image. Accordingly, the computation unit 110 may perform an image synthesis processing to add the simulated objects to be tested to the simulated background image to generate a simulated synthesized image, as shown in FIG. 2K.

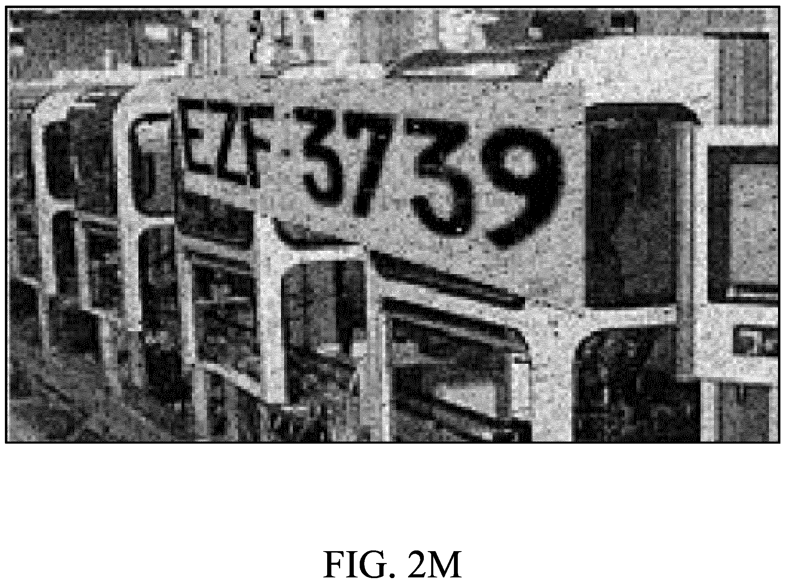

For example, the image synthesis processing can adjust the simulated to-be-tested object to an appropriate image size and paste it at any position in the simulated background image (e.g., in a predetermined range in the simulated background image), and perform an edge-smoothing process on the simulated to-be-tested object with the simulated background image to generate the simulated synthesized image. It should be noted that the simulated to-be-tested object that is added to the simulated background image does not have the image features of the simulated scene in the simulated background image. Accordingly, the computation unit 110 may further perform the second image processing to add one or more background-image features to the simulated synthesized image to generate a simulated object image, wherein the aforementioned procedure is to enhance the consistency between the simulated to-be-tested object and the background to generate the simulated object image for training. FIGs. 2L-1~2L-4 are diagrams of simulated object images by respectively adding image features such as blurriness, interference, pepper-and-salt noise, and Gaussian noise to the simulated synthesized image. The simulated object image shown in FIG. 2M is the result by adding the different image features in FIGs. 2L-1~2L-4 to the simulated synthesized image. In the aforementioned process of the present invention, the simulated to-be-tested object covered on any background image can improve the complexity of the background of the license plate, and be beneficial to enhancing the effect of the subsequent training procedure of the object-recognition model.

The computation unit 110 may select different combinations of object-image features and background-image features, select different real background images, and repeatedly performed the processes in the aforementioned embodiments to generate different simulated object images. Therefore, the computation unit 110 can obtain a plurality of simulated object images to form a simulated-object-image set, and store the simulated-object-image set in the fourth database 138.

Afterwards, the computation unit 110 may train an object-recognition model 141 according to the simulated-object-image set in the fourth database 138. For example, the computation unit 110 may use techniques such as a support vector machine, a convolutional neural network, or a deep neural network to train the object-recognition model 141, but the invention is not limited thereto. It should be noted that, in the procedure for training the object-recognition model 141, the computation unit 110 uses the simulated object images in the simulated-object-image set. Since the simulated object images are obtained by simulating variations of different scenes and different training objects (e.g., simulated license-plate images), and thus it can greatly cover the situations in the to-be-tested field that cannot be obtained. Accordingly, the computation unit 110 may use the simulated object images in the simulated-object-image set rather than the real-scene images to train the object-recognition model 141.

In an embodiment, in response to the training of the object-recognition model 141 being completed, the computation unit 110 may input a to-be-tested image from an external host or from a to-be-tested scene (e.g., scenes including vehicles) captured by the image-capturing device 120 to the object-recognition model 141 to obtain an object-recognition result, wherein the object-recognition result, for example, may be a license-plate number in the to-be-tested image.

In another embodiment, the fifth database 139 in the non-volatile memory 132 may store a test-image set including a plurality of test images, wherein the test-image set can be referred to as an unlabeled test-image set. The test images, for example, may include images of vehicles and their license plates captured in real scenes. For example, the computation unit 110 may input each of the test images in the test-image set into the object-recognition model 141 to obtain a corresponding object-recognition result, and store the object-recognition result corresponding to each test image in the fifth database 139 in the non-volatile memory 132. Alternatively, the computation unit 110 may label the object-recognition result on each corresponding test image, and store the labeled test image separately into the sixth database 140 in the non-volatile memory 132.

In an embodiment, because of the influence of various environmental changes, the object-recognition result of the object-recognition model 141 may not be 100% accurate, and thus the user may determine whether the object-recognition result of each test image in the test-image set is correct by manual inspection. If it is determined that the object-recognition result of a specific test image is not correct, the computation unit 110 may add the specific test image into the fourth database 138, and input the correct object-recognition result corresponding to the specific test image to the object-recognition model 141 to re-train and update the object-recognition model 141, thereby improving the recognition rate of the object-recognition model 141 under similar circumstances. Similarly, if the object-recognition result of a to-be-tested image captured from the to-be-tested scene that is input to the object-recognition model 141 is incorrect, the computation unit 110 may add the to-be-tested image into the fourth database 138, and input the correct object-recognition result corresponding to the to-be-tested image into the object-recognition model 141 to re-train and update the object-recognition model 141.

In another embodiment, the user may pre-store each of the test images and its corresponding correct object-recognition result in the fifth database 139. After the object-recognition model 141 is trained by the computation unit 110 in the initial phase, each of the test images in the fifth database 139 can be input to the object-recognition model 141 to generate a corresponding object-recognition result that is compared with the pre-stored correct object-recognition result. If the generated object-recognition result and the pre-stored correct object-recognition result do not match (i.e., the object-recognition result indicates a "failure"), the computation unit 110 may add the test image corresponding to the generated object-recognition result to the fourth database 138, and input the corresponding correct object-recognition result into the object-recognition model 141 to re-train and update the object-recognition model 141, thereby improving the recognition rate of the object-recognition model 141.

Specifically, the training procedure of the object-recognition model 141 in the present invention is mainly based on simulated object images, and the to-be-tested images in real scenes or the test images in the fifth database 139 can be used to assist in correcting and updating the object-recognition model 141.

In an embodiment, the object images (e.g., license-plate images) captured in real scenes may be visually affected by the influence of the environment, which are the aforementioned object-image features and can also be regarded as to-be-tested object (e.g., license plates) features. The object-image features may include, for example, blurriness, scratches or stains, shadows, shadings, overexposures, distortions, and chromatic aberrations, but the invention is not limited thereto. The object-image features can be expressed in different ways.

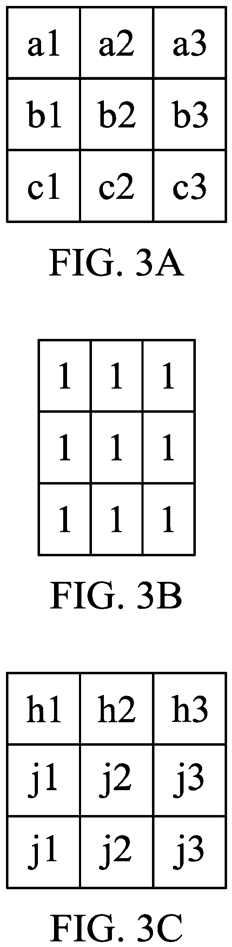

For example, taking the blurriness feature as an example, when the vehicle speed is too fast, the focus fails, or the vehicle is too far away, the license plate of the vehicle may be blurred. Accordingly, the blurriness feature can be expressed, for example, by a blurriness mask, such as a M*N matrix, and the center pixel corresponding to the blurriness mask is multiplied by the M*N matrix to obtain a blurred center pixel. For example, pixels in the three rows of the license-plate image in the blurriness mask from left to right, from top to bottom are respectively a1 to a3, b1 to b3, and c1 to c3, wherein b2 denotes the center pixel, as shown in FIG. 3A. The blurriness mask, for example, may be a 3x3 matrix, as shown in FIG. 3B. The coefficients in the 3x3 matrix are all 1, but the invention is not limited to the aforementioned blurriness mask, and the well-known blurriness masks in the art of the present invention can also be used. Accordingly, the center pixel b2 processed by the blurriness mask may be updated to b2 = (a1*1 + a2*1 + a3*1 +b1*1 +b2*1 +b3*1 +c1*1 + c2*1 +c3*1)* (1/9).

Taking the feature of scratches or stains as an example, the characters on the license plate may have scratches or stains, and the scratches may exist in straight lines or curved lines, and the stains may exist on a plane. Accordingly, the computation unit 110 may respectively use the straight-line equation or the curved-line equation to simulate the scratches on the license plate, and simulate the stains on the license plate using a plane equation.

Taking the shadow feature as an example, the light source and the environment may cause shadows in specific areas of the license-plate image. Accordingly, the computation unit 110 may apply a brightness mask on the license-plate image to generate a shadow image effect. For example, pixels in the three rows of the license plate image in the brightness mask from top to bottom are respectively a1 to a3, b1 to b3, and c1 to c3, wherein b2 denotes the center pixel, as depicted in FIG. 3A. The coefficients in the three rows of the brightness mask from top to bottom are respectively h1 to h3, i1 to i3, and j1 to j3, where the values of coefficients h1 to h3, i1 to i3, and j1 to j3 may be positive numbers larger than 1, or smaller than or equal to 1, depending on the design requirements of the brightness mask. Accordingly, the computation unit 110 may update pixel a1 in the license-plate image to a1=a1*h1, and update pixel a2 in the license-plate image to a2=a2*h2, and so forth.

Taking the shadowing feature as an example, weather (e.g., dust, rain, snow, etc.) or other objects (e.g., leaves, insects, etc.) are covered on the license plate to produce a shadowing effect. Accordingly, the computation unit 110 may use one or more plane equations as a mask to block a part of the area of the license-plate image, and the size of the mask is based on a principle that the characters on the license plate are not damaged.

Taking the overexposure feature as an example, the light source from the lamp of the vehicle cannot be suppressed and the area near the lamp is overexposed. Accordingly, the computation unit 110 may apply a brightness mask on the license-plate image to generate an overexposed image effect. For example, pixels in the three rows of the license plate image in the brightness mask from top to bottom are respectively a1 to a3, b1 to b3, and c1 to c3, wherein b2 denotes the center pixel, as depicted in FIG. 3A. The coefficients in the three rows of the brightness mask from top to bottom are respectively h1 to h3, i1 to i3, and j1 to j3, where the values of coefficients h1 to h3, i1 to i3, and j1 to j3 may be positive numbers larger than 1, or smaller than or equal to 1, depending on the design requirements of the brightness mask. However, the coefficients in the brightness mask for the overexposure feature and those for the shadow feature are different. Accordingly, the computation unit 110 may update pixel a1 in the license-plate image to a1=a1*h1, and update pixel a2 in the license-plate image to a2=a2*h2, and so forth.

Taking the deformation feature as an example, different viewing angles of the camera may cause a three-axis rotation (X-axis, Y-axis, and Z-axis) of the captured license-plate image. Accordingly, the computation unit 110 may apply a transparent transformation matrix on the license-plate image to generate the deformation image effect. For example, the computation unit 110 may calculate the transparent transformation matrix using equation (1):

$$[x', y', z'] = [u, v, w] \begin{bmatrix} a_{11} & a_{12} & a_{13} \\ a_{21} & a_{22} & a_{23} \\ a_{31} & a_{32} & a_{33} \end{bmatrix} \quad\quad (1)$$

The computation unit 110 may set the values of coefficients $a_{11}$~$a_{33}$ in the 3x3 matrix according to requirements, and simulate license-plate images in different viewing angles by applying the transparent transformation matrix (e.g., substituting the pixel value (x,y) by the pixel value (x'/w', y'/w')) on the simulated object (e.g., simulated object composing of different characters).

Taking the chromatic-abbreviation feature as an example, when the camera is affected by the environment, it may cause chromatic abbreviation of the license-plate image when the light passing through the lens. Accordingly, the computation unit 110 may perform a color-space conversion on the license-plate image to achieve the chromatic-abbreviation image effect.

In an embodiment, the background-image feature may be, for example, noises generated by images captured in a real scene, and background-image features may also be referred to as environmental-noise features. The background-image features may include, for example, blurriness, scratches or stains, shadows, noises, shadowing, overexposure, distortion, and chromatic aberration, but the invention is not limited thereto. The background-image features can be expressed in different ways. It should be noted that a portion of image features in the object-image features and the background-image features have the same names, and these image features are processed in a similar manner. However, the object-image features are processed on each training object (e.g., simulated license-plate image), and the background-image features are processed on entire the background image (e.g., may not including the license plate) or simulated synthesized image. Accordingly, the parameters and coefficients in the masks, matrices, and equations for the corresponding common types in the object-image features and background-image features are different.

In an embodiment, in comparison with the object-image features, the background-image features further include a noise feature. For example, the computation unit 110 may add noises of different types to the image to be processed (e.g., the training object, background image, or simulated synthesized image), such as salt-and-pepper noise, Gaussian noise, speckle noise, or periodic noise. With regard to the salt-and-pepper noise, the computation unit 110 may set the salt-and-pepper noise as x% of the image area of the image to be processed, and randomly add the salt-and-pepper noise to the image to be processed, wherein the value of x can be adjusted according to actual conditions. With regard to the Gaussian noise, speckle noise, and periodic noise, the computation unit 110 may use well-known techniques to add these noises into the image to be processed, and the details will be omitted here.

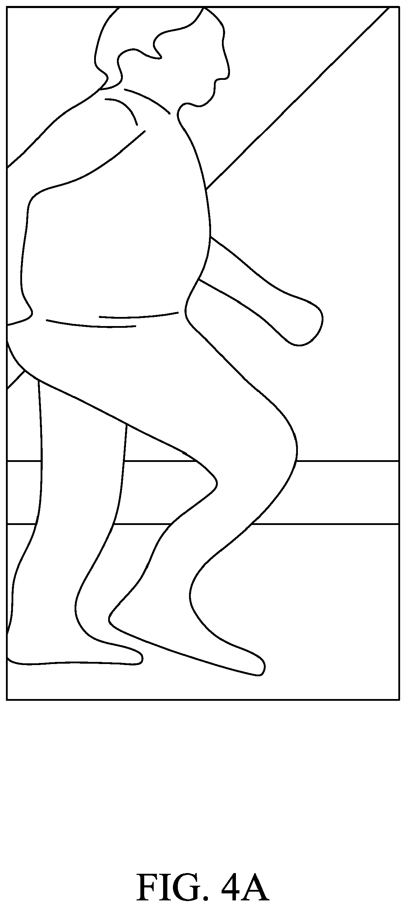

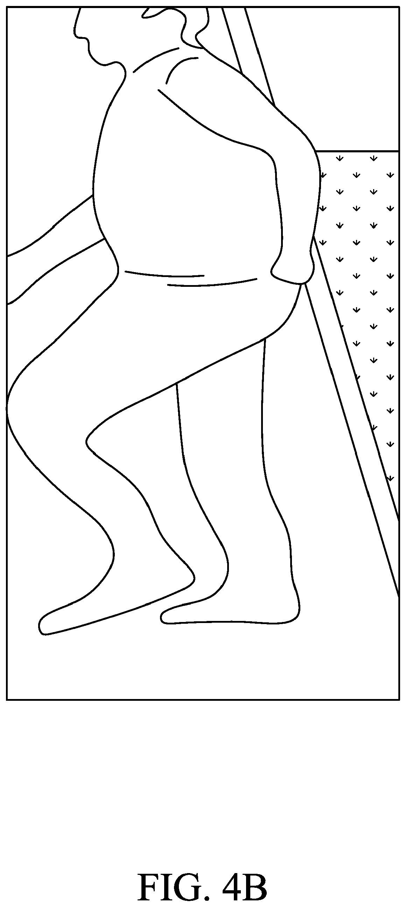

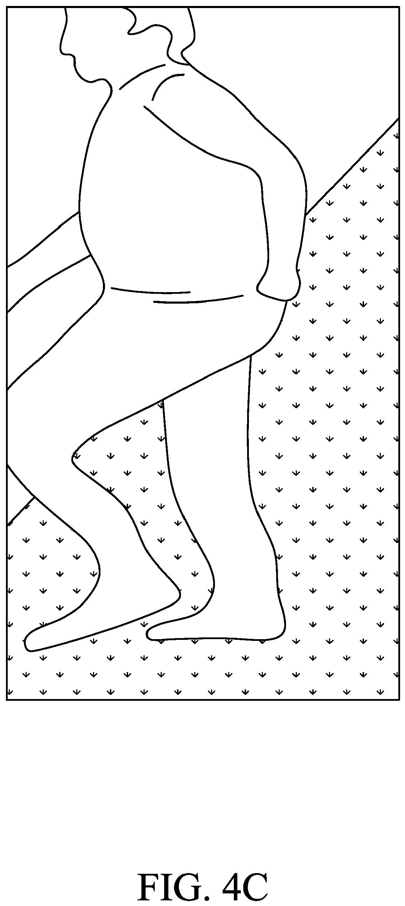

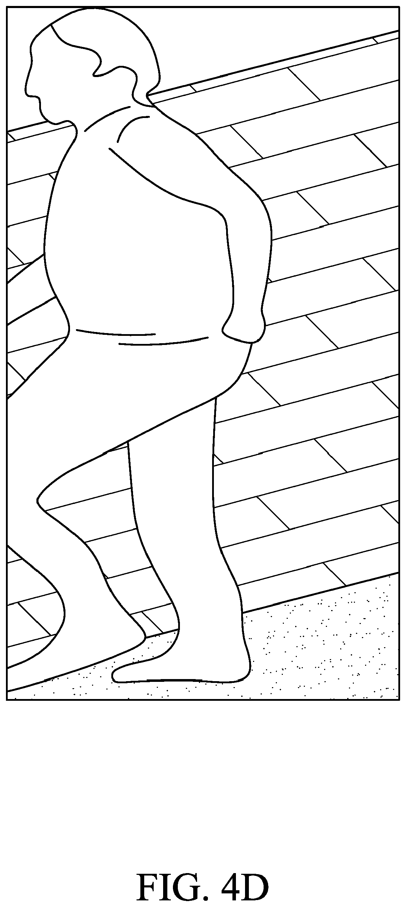

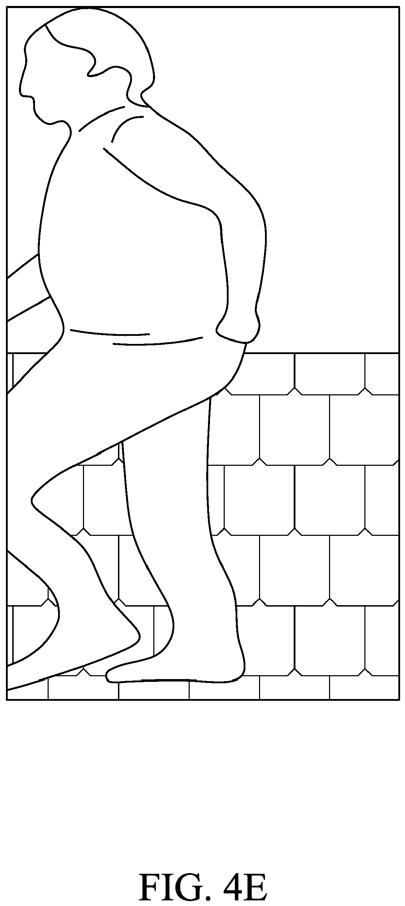

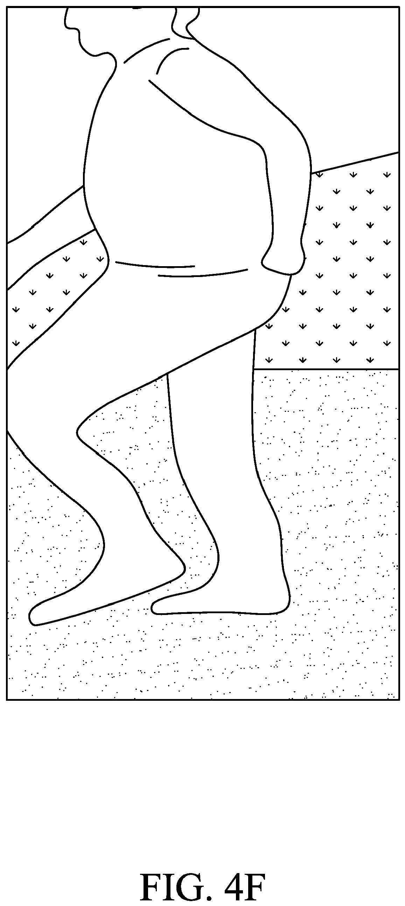

FIGs. 4A~4F are diagrams of the training objects used in the object-recognition procedure in accordance with another embodiment of the invention. In another embodiment, the training object generated by the computation unit 110 is not limited to the simulated license-plate image. For example, the training object may include a human body, a license plate, a component, or a sign. In the embodiment, the object-scene images stored in the first database 135 may include human-body images having one or more human body postures, and the computation unit 110 may identify the human-body region from each object-scene image, capture the human-body region as the object image, and store the captured object image in the third database 137.

As shown in FIGs. 4A~4F, the object images stored in the third database 137 may be human-body images obtained from different backgrounds and positions. In the embodiment, the predetermined rule, for example, may be that the object images in the third database 137 can be directly used as the training objects, and thus the computation unit 110 may directly select one of the object images stored in the third database 137 as the training objects. In some embodiments, the predetermined rule may be arranging one or more object images with a predetermined manner or spacing to generate the training object, but the invention is not limited thereto. Similarly, when the object to be recognized is a character, a human body, a component, a sign, etc., object-scene images of a corresponding type can be stored in the first database 135, and the object images can be obtained from the object-scene images. Then, the procedure in the aforementioned embodiments can be applied to generate simulated object images of the corresponding type to obtain the simulated-object-image set, and the object-recognition model 141 is trained according to the simulated-object-image set.

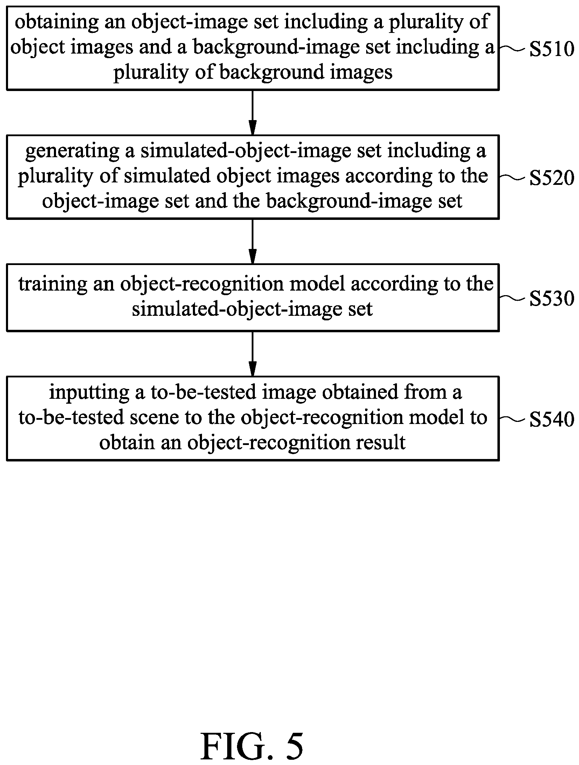

FIG. 5 is a flow chart of an object-recognition method using simulated object images in accordance with an embodiment of the invention.

Referring to FIG. 1 and FIG. 5, in step S510, an object-image set including a plurality of object images and a background-image set including a plurality of background images are obtained. The object-image set, for example, may be stored in the third database 137, and the object images may be images of objects of one or more types, such as a character, a human body, a license plate, a component, a sign, etc., but the invention is not limited thereto. The background-image set, for example, may be stored in the second database 136. The background images may be real background images of any real scene obtained under different shooting conditions, and not limited to the background images of the scene to be tested, and may not include the to-be-tested object. In some embodiments, the background image may further include a virtual background image simulated by computer-vision technology.

In step S520, a simulated-object-image set including a plurality of simulated object images is generated according to the object-image set and the background-image set. For example, the computation unit 110 may use one or more object images to form one or more training objects according to a predetermined rule, and perform a first image processing to add one or more object-image features to each of the training objects to generate one or more simulated to-be-tested objects. The computation unit 110 may generate the simulated object-image set according to one or more simulated to-be-tested objects and the background-image set. The aforementioned one or more object-image features can be captured from the object-scene images stored in the first database 135, or can be simulated using equations or matrix operations. The computation unit 110 may then obtain a first background image from the background-image set stored in the second database 136, and perform a second image processing to add the one or more background-image features to the first background image to generate a simulated background image. The computation unit 110, for example, may generate the simulated-object-image set according to the one or more simulated to-be-tested objects and the simulated background image. Then, the computation unit 110 may perform an image-synthesis process to add the simulated to-be-tested object to the simulated background image to generate a simulated synthesized image, and perform the second image processing to add the one or more background-image features to the simulated synthesized image to generate one of the simulated object images.

In step S530, an object-recognition model is trained according to the simulated-object-image set. For example, in an embodiment, the computation unit 110 may train the object-recognition model 141 using the simulated-object-image set (i.e., the model can be trained without using real images). In another embodiment, the computation unit 110 may directly add real object images into the simulated-object-image set to generate a mixed-object-image set, and train the object-recognition model 141 using the mixed object-image set.

In step S540, a to-be-tested image obtained from a to-be-tested scene is input to the object-recognition model to obtain an object-recognition result. For example, each of the test images and its corresponding correct object-recognition result can be pre-stored in the fifth database 139. After the object-recognition model 141 is trained by the computation unit 110 in the initial phase, each of the test images in the fifth database 139 can be input to the object-recognition model 141 to generate a corresponding object-recognition result that is compared with the pre-stored correct object-recognition result. If the generated object-recognition result and the pre-stored correct object-recognition result do not match (i.e., the object-recognition result indicates a "failure"), the computation unit 110 may add the to-be-tested image into the simulated-object-image set to generate a mixed-object-image set, and re-train the object-recognition model 141 according to the mixed-object-image set and a correct object-recognition result corresponding to the to-be-tested image.

In view of the above, an object-recognition system and method thereof using simulated object images are provided in the present invention. The object-recognition system and method are capable of extracting object features and environmental features using a small amount of image data, and generate a lot of labeled simulated object images and simulated background images to increase the variety of the training data set (e.g., simulated-object-image set). Because the simulated data is close to the actual data, the method in the present invention may mainly use the simulated image data with the assistance of real image data, thereby significantly reducing the time for data preparation and resolving the dilemma encountered when it is difficult to obtain the image data.

The methods, or certain aspects or portions thereof, may take the form of a program code embodied in tangible media, such as floppy diskettes, CD-ROMs, hard drives, or any other machine-readable (e.g., computer-readable) storage medium, or computer program products without limitation in external shape or form thereof, wherein, when the program code is loaded into and executed by a machine such as a computer, the machine thereby becomes an apparatus for practicing the methods. The methods may also be embodied in the form of program code transmitted over some transmission medium, such as an electrical wire or a cable, or through fiber optics, or via any other form of transmission, wherein, when the program code is received and loaded into and executed by a machine such as a computer, the machine becomes an apparatus for practicing the disclosed methods. When implemented on a general-purpose processor, the program code combines with the processor to provide a unique apparatus that operates analogously to application specific logic circuits.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having the same name (but for use of the ordinal term) to distinguish the claim elements.

While the invention has been described by way of example and in terms of the preferred embodiments, it should be understood that the invention is not limited to the disclosed embodiments. On the contrary, it is intended to cover various modifications and similar arrangements as would be apparent to those skilled in the art. Therefore, the scope of the appended claims should be accorded the broadest interpretation so as to encompass all such modifications and similar arrangements.

**Claims**

1. An object-recognition method using simulated object images, the method comprising:

   (A) obtaining an object-image set including a plurality of object images and a background-image set including a plurality of background images;
   (B) generating a simulated-object-image set including a plurality of simulated object images according to the object-image set and the background-image set;
   (C) training an object-recognition model according to the simulated-object-image set; and
   (D) inputting a to-be-tested image obtained from a to-be-tested scene to the object-recognition model to obtain an object-recognition result.

2. The method as claimed in claim 1, wherein step (B) comprises:

   using the object images to form one or more training objects according to a predetermined rule;
   performing a first image processing to add one or more object-image features to each of the one or more training objects to generate one or more simulated to-be-tested objects; and
   generating the simulated-object-image set according to the one or more simulated to-be-tested objects and the background-image set.

3. The method as claimed in claim 2, wherein the one or more object-image features are captured from the object images.

4. The method as claimed in any of the preceding claims, wherein step (B) further comprises:

   obtaining a first background image from the background images;
   performing a second image processing to add the one or more background-image features to the first background image to generate a simulated background image; and
   generating the simulated-object-image set according to the simulated background image and the one or more simulated to-be-tested objects.

5. The method as claimed in claim 4, wherein step (B) further comprises:

   performing an image synthesis process to add the simulated to-be-tested object to the simulated background image to generate a simulated synthesized image; and
   performing the second image processing to add the one or more background-image features to the simulated synthesized image to generate one of the simulated object images.

6. The method as claimed in any of the preceding claims, further comprising:

   (E) in response to the object-recognition result indicating a failure, adding the to-be-tested image to the simulated-object-image set to generate a mixed-object-image set; and
   (F) re-training the object-recognition model according to the mixed-object-image set and a correct object-recognition result of the to-be-tested image.

7. The method as claimed in any of the preceding claims, wherein step (C) further comprises:

   adding one or more real object images to the simulated-object-image set to generate a mixed-object-image set; and
   re-training the object-recognition model according to the mixed-object-image set.

8. An object-recognition system using simulated object images, the system comprising:

   a non-volatile memory, configured to store an object-recognition program; and
   a processor, configured to execute the object-recognition program to perform the steps of:

      (A) obtaining an object-image set including a plurality of object images and a background-image set including a plurality of background images;
      (B) generating a simulated-object-image set including a plurality of simulated object images according to the object-image set and the background-image set;

(C) training an object-recognition model according to the simulated-object-image set; and

(D) inputting a to-be-tested image obtained from a to-be-tested scene to the object-recognition model to obtain an object-recognition result.

9. The object-recognition system as claimed in claim 8, wherein in step (B), the processor uses the object images to form one or more training objects according to a predetermined rule, performs a first image processing to add one or more object-image features to each of the one or more training objects to generate one or more simulated to-be-tested objects, and generates the simulated-object-image set according to the one or more simulated to-be-tested objects and the background-image set.

10. The object-recognition system as claimed in claim 9, wherein the one or more object-image features are captured from the object images.

11. The object-recognition system as claimed in any of claims 8-10, wherein in step (B), the processor obtains a first background image from the plurality of background images, performs a second image processing to add the one or more background-image features to the first background image to generate a simulated background image, and generates the simulated-object-image set according to the simulated background image and the one or more simulated to-be-tested objects.

12. The object-recognition system as claimed in claim 11, wherein in step (B), the processor performs an image synthesis process to add the simulated to-be-tested object to the simulated background image to generate a simulated synthesized image, and performs the second image processing to add the one or more background-image features to the simulated synthesized image to generate one of the simulated object images.

13. The object-recognition system as claimed in any of claims 8-12, wherein the processor further performs the steps of:

(E) in response to the object-recognition result indicating a failure, adding the to-be-tested image to the simulated-object-image set to generate a mixed-object-image set; and

(F) re-training the object-recognition model according to the mixed-object-image set and a correct object-recognition result of the to-be-tested image.

14. The object-recognition system as claimed in any of claims 8-13, wherein in step (C), the processor further adds one or more real object images to the simulated-object-image set to generate a mixed-object-image set, and re-trains the object-recognition model according to the mixed-object-image set.

FIG. 1

EP 3 657 390 A1

FIG. 2A

FIG. 2B

FIG. 2C

FIG. 2D

EP 3 657 390 A1

FIG. 2E

FIG. 2F

EP 3 657 390 A1

FIG. 2G

18

FIG. 2H-1

FIG. 2H-2

FIG. 2H-3

FIG. 2H-4

FIG. 2H-5

EP 3 657 390 A1

FIG. 2H-6

FIG. 2I

FIG. 2J-1

FIG. 2J-2

FIG. 2K

FIG. 2L-1

FIG. 2L-2

FIG. 2L-3

FIG. 2L-4

EP 3 657 390 A1

FIG. 2M

| a1 | a2 | a3 |
|----|----|----|
| b1 | b2 | b3 |
| c1 | c2 | c3 |

FIG. 3A

| 1 | 1 | 1 |
|---|---|---|
| 1 | 1 | 1 |
| 1 | 1 | 1 |

FIG. 3B

| h1 | h2 | h3 |
|----|----|----|
| j1 | j2 | j3 |
| j1 | j2 | j3 |

FIG. 3C

FIG. 4A

FIG. 4B

FIG. 4C

FIG. 4D

FIG. 4E

FIG. 4F

obtaining an object-image set including a plurality of object images and a background-image set including a plurality of background images ～S510

generating a simulated-object-image set including a plurality of simulated object images according to the object-image set and the background-image set ～S520

training an object-recognition model according to the simulated-object-image set ～S530

inputting a to-be-tested image obtained from a to-be-tested scene to the object-recognition model to obtain an object-recognition result ～S540

# FIG. 5

Europäisches
Patentamt
European
Patent Office
Office européen
des brevets

# EUROPEAN SEARCH REPORT

Application Number

EP 19 18 9207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRABHU B SACHIN ET AL: "Recognition of Indian license plate number from live stream videos", 2017 INTERNATIONAL CONFERENCE ON ADVANCES IN COMPUTING, COMMUNICATIONS AND INFORMATICS (ICACCI), IEEE, 13 September 2017 (2017-09-13), pages 2359-2365, XP033276305, DOI: 10.1109/ICACCI.2017.8126199 [retrieved on 2017-11-30] | 1-5,8-12 | INV. G06K9/32 G06K9/62 |
| Y | * p.2361, chapter IV; p.2363-2364 chapter D; fig.3 * | 7,14 | |
| X | BJORKLUND TOMAS ET AL: "Automatic license plate recognition with convolutional neural networks trained on synthetic data", 2017 IEEE 19TH INTERNATIONAL WORKSHOP ON MULTIMEDIA SIGNAL PROCESSING (MMSP), IEEE, 16 October 2017 (2017-10-16), pages 1-6, XP033271592, DOI: 10.1109/MMSP.2017.8122260 [retrieved on 2017-11-27] | 1-5,8-12 | |
| Y | * section III on p.3-4 and p.6, first par. * | 7,14 | TECHNICAL FIELDS SEARCHED (IPC) G06K |
| X | EP 2 595 092 A2 (XEROX CORP [US]) 22 May 2013 (2013-05-22) | 1-6,8-13 | |
| Y | * paragraphs [0018], [0021], [0024] - paragraphs [0055], [0058] * | 7,14 | |
| X | CN 108 460 414 A (BEIJING SCIENCE & TECH CO THREE FAST ONLINE) 28 August 2018 (2018-08-28) | 1-5,8-12 | |
| Y | * par.9-15, par.47-55, 81-113, par.120-122 of the translation * | 7,14 | |

-/--

The present search report has been drawn up for all claims

| Place of search | Date of completion of the search | Examiner |
|---|---|---|
| The Hague | 11 February 2020 | Wunderlich, Doreen |

EPO FORM 1503 03.82 (P04C01)

page 1 of 2

Europäisches
Patentamt

European
Patent Office

Office européen
des brevets

# EUROPEAN SEARCH REPORT

Application Number

EP 19 18 9207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/307061 A1 (BULAN ORHAN [US] ET AL) 20 October 2016 (2016-10-20) * paragraph [0009]; claim 1 * ----- | 7,14 | |

TECHNICAL FIELDS SEARCHED (IPC)

The present search report has been drawn up for all claims

| Place of search | Date of completion of the search | Examiner |
|---|---|---|
| The Hague | 11 February 2020 | Wunderlich, Doreen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 18 9207

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2020

| Patent document cited in search report | | Publication date | Patent family member(s) | | Publication date |
|---|---|---|---|---|---|
| EP 2595092 | A2 | 22-05-2013 | EP 2595092 A2<br>EP 2897082 A1<br>US 2013129151 A1 | | 22-05-2013<br>22-07-2015<br>23-05-2013 |
| CN 108460414 | A | 28-08-2018 | NONE | | |
| US 2016307061 | A1 | 20-10-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811399155